(19) Europäisches Patentamt
European Patent Office
Office européen des brevets

(11) **EP 3 157 677 B1**

(12) **FASCICULE DE BREVET EUROPEEN**

(45) Date de publication et mention
de la délivrance du brevet:
**01.09.2021 Bulletin 2021/35**

(21) Numéro de dépôt: **15733834.4**

(22) Date de dépôt: **15.06.2015**

(51) Int Cl.:
*B01J 37/08* (2006.01)    *B01J 37/20* (2006.01)
*B01J 23/847* (2006.01)    *B01J 23/755* (2006.01)
*B01J 23/882* (2006.01)    *B01J 23/883* (2006.01)
*B01J 23/888* (2006.01)    *B01J 29/035* (2006.01)
*B01J 38/08* (2006.01)    *B01J 38/66* (2006.01)

(86) Numéro de dépôt international:
**PCT/FR2015/051576**

(87) Numéro de publication internationale:
**WO 2015/193598 (23.12.2015 Gazette 2015/51)**

(54) **PROCÉDÉ D'ACTIVATION DE CATALYSEURS D'HYDROTRAITEMENT**

PROZESS ZUR AKTIVIERUNG VON HYDROTREATMENT-KATALYSATOREN

PROCESS TO ACTIVATE HYDROTREATING CATALYSTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2014 FR 1455590**

(43) Date de publication de la demande:
**26.04.2017 Bulletin 2017/17**

(73) Titulaire: **Arkema France**
**92700 Colombes (FR)**

(72) Inventeur: **HUMBLOT, Francis**
**F-64300 Lanneplaa (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A2- 2 695 675      FR-A1- 2 668 951**
**FR-A1- 2 778 349      US-A- 6 093 309**
**US-A1- 2002 013 223**

**Description**

DOMAINE DE L'INVENTION

La présente invention s'intéresse aux réactions d'hydrotraitement. Elle se rapporte notamment aux réactions d'hydrotraitement mises en jeu lors de l'hydrocraquage de coupes pétrolières et lors de la transformation de la biomasse. La présente invention se réfère donc aussi bien au domaine du raffinage du pétrole qu'au domaine de la production de biocarburants, dans lesquels une activation de catalyseurs d'hydrotraitement est réalisée. Plus particulièrement, elle concerne l'activation de catalyseurs mis en oeuvre au cours de ces opérations d'hydrotraitement, ci-après désignés « catalyseur(s) d'hydrotraitement ». Plus spécifiquement encore, l'invention se rapporte à un procédé d'activation *insitu* de catalyseurs d'hydrotraitement et à l'utilisation de composés azotés spécifiques lors dudit procédé pour contrôler l'activité des catalyseurs d'hydrotraitement.

ARRIÈRE-PLAN TECHNOLOGIQUE

L'hydrotraitement est un procédé qui permet, par traitement à l'hydrogène, notamment de réduire la quantité de composés tels que composés soufrés, azotés, oxygénés ou encore de métaux, présents dans un produit ou un mélange de produits. Ce procédé d'hydrotraitement est utilisé dans de très nombreux domaines et particulièrement dans le domaine du raffinage du pétrole pour purifier les coupes pétrolières mais aussi dans le domaine de la production de biocarburants.

On distingue parmi les biocarburants ceux dits de première génération comme par exemple l'éthanol issu de la fermentation de plantes sucrières (betterave, canne à sucre...) ou de l'hydrolyse enzymatique de l'amidon de céréales (maïs, blé...), et le biodiesel obtenu par trans-estérification d'huiles végétales par le méthanol. Généralement, ces procédés bien connus de l'homme du métier n'utilisent pas d'hydrogène et ne mettent pas en oeuvre des procédés d'hydrotraitement.

Le développement de ces biocarburants de première génération a créé la controverse notamment à cause de leurs origines. En effet, les matières premières nécessaires à ces biocarburants impliquent des cultures intensives qui viennent concurrencer les productions agricoles à des fins alimentaires. Pour remédier à ce problème, des efforts de recherches importants ont été déployés pour développer des biocarburants de deuxième génération, afin d'utiliser d'autres matières premières naturelles telles que les huiles végétales non alimentaires, les déchets d'huiles végétales ou animales, telles que huiles de friture usagées, graisses animales, et autres.

Parmi ces biocarburants de deuxième génération, certains sont issus de la biomasse lignocellulosique tels que le bois, la paille, les déchets agricoles, les résidus forestiers ou encore les espèces dédiées telles que le miscanthus, ou le panic érigé. Cette biomasse lignocellulosique est transformée par pyrolyse à haute température, par exemple entre 400°C et 700°C. À cette température, les éléments constitutifs de la biomasse comme la cellulose, la lignine et l'hémicellulose vont se dépolymériser, se fragmenter en molécules plus légères qui vont se vaporiser. En refroidissant, les vapeurs se condensent pour former un produit liquide appelé huile de pyrolyse, qui est principalement composée d'eau, de phénols, de cétones, d'aldéhydes, d'alcools, d'acides carboxyliques, et d'hydrates de carbone.

L'utilisation de l'huile de pyrolyse ou d'autres composés d'origine naturelle comprenant des chaînes aliphatiques comme précurseurs de biocarburants, nécessite le plus souvent des transformations et des purifications. En effet, tous ces composés naturels présentent de fortes concentrations en impuretés, par exemple les composés oxygénés et des structures non compatibles avec une utilisation directe en tant que carburant. De plus, l'huile de pyrolyse est chimiquement instable et cette instabilité augmente avec la température, ce qui est un réel problème pour un carburant.

Ces composés d'origine naturelle comme l'huile de pyrolyse, sont ainsi améliorés grâce à des procédés additionnels divulgués dans l'art antérieur et plus particulièrement des procédés d'hydrotraitement.

L'hydrotraitement n'est pas réservé au domaine des biocarburants, ce procédé est également utilisé dans de très nombreux autres domaines, et tout particulièrement dans le domaine de la raffinerie, et plus particulièrement lors de la transformation (dite « craquage ») de coupes lourdes en fractions légères. En effet, lors du raffinage du pétrole, le craquage est une opération qui consiste à transformer des molécules organiques complexes en composés de plus faibles masses moléculaires. Différentes techniques peuvent être employées, parmi lesquelles on distingue en particulier le craquage catalytique et l'hydrocraquage.

Le craquage catalytique est une réaction endothermique qui permet principalement d'obtenir des carburants (tels que essences et gasoil) et des oléfines légères (par exemple : propylène, butylène, et autres). Ce procédé consiste essentiellement à craquer des hydrocarbures à haute température, par exemple de 450°C à 550°C, sous une pression proche de la pression atmosphérique, par exemple de 1 à 5 bars (soit de $1.10^5$ Pa à $5.10^5$ Pa), et s'accompagne de formation de carbone qui se dépose sur le catalyseur. Ce dernier est en mouvement dans l'unité en lit fluidisé afin d'être régénéré en continu par combustion du carbone par de l'air.

L'hydrocraquage permet principalement d'obtenir du gasoil, du kérosène et de l'essence. Ce procédé consiste essentiellement à craquer des hydrocarbures à plus faible température, par exemple de 250°C à 450°C, sous haute pression d'hydrogène, par exemple de 50 à 200 bars (soit de $50.10^5$ à $200.10^5$ Pa). Cette réaction s'accompagne d'autres réactions d'hydrogénation de composés insaturés et/ou d'impuretés, telles que par exemple le soufre et l'azote. Ces impuretés hydrogénées peuvent être facilement séparées des coupes d'hydrocarbures qui satisfont alors aux spécifications des carburants commerciaux. En particulier, l'hydrocraquage est mis en oeuvre en présence d'un catalyseur, en lit fixe, ce qui contraint à arrêter le procédé périodiquement pour réactiver le catalyseur par sulfuration de celui-ci.

La présente invention s'intéresse ainsi à l'hydrocraquage, et non au craquage catalytique.

Le terme « hydrotraitement », tel qu'employé dans la présente description, décrit un procédé catalytique d'hydrogénation sous pression d'une charge afin de produire des carburants en particulier des carburants purifiés. Ce terme comprend à la fois le terme « hydrocraquage » qui implique à la fois des réactions usuelles visant, avec l'hydrogène, à rompre des liaisons entre des hétéroatomes (oxygène, azote, soufre principalement) et des atomes de carbones ainsi que des réactions de craquage et d'isomérisation de liaisons carbone - carbone afin de réduire la longueur des chaines et d'obtenir un squelette plus ramifié.

Ces deux procédés mettent en oeuvre des catalyseurs communs. Ainsi, dans la suite du texte, le terme hydrotraitement comprend notamment les termes hydrogénation, hydroisomérisation, hydrodéazotation, hydrodésulfuration, hydrodésoxygénation, désaromatisation, hydroconversion, en particulier hydrocraquage et plus particulièrement toutes réactions mettant en jeu l'hydrogène.

Lors de l'opération d'activation ou de réactivation du catalyseur d'hydrotraitement, en particulier d'hydrocraquage, si rien n'est fait pour inhiber la réaction de craquage, un emballement réactionnel peut se produire en raison de la forte exothermicité de cette réaction. Il peut en résulter une perte d'activité du catalyseur, sa détérioration, voire un endommagement des équipements industriels. Ce phénomène peut aussi se produire lors de la production de biocarburants, plus particulièrement des biocarburants issus de la biomasse lignocellulosique.

Pour éviter ce problème, il est connu d'utiliser un composé azoté, généralement de l'ammoniac ou de l'aniline, l'aniline étant alors utilisée en tant que précurseur d'ammoniac. En effet, l'ammoniac, introduit ou généré *in-situ,* passive le catalyseur par réaction avec les sites acides de celui-ci, responsables de son activité d'hydrotraitement, en particulier d'hydrocraquage, dite activité d'hydrotraitement ou activité « hydrocraquante » respectivement. Ces sites acides ainsi désactivés, la réaction d'hydrotraitement, en particulier d'hydrocraquage est inhibée et la sulfuration du catalyseur peut avoir lieu en toute sécurité.

La sulfuration consiste à mettre en contact un agent de sulfuration, par exemple le sulfure d'hydrogène ou un précurseur du sulfure d'hydrogène, avec le catalyseur d'hydrotraitement, en particulier d'hydrocraquage. Lorsque la sulfuration est réalisée sous hydrogène à haute température, il en résulte une transformation totale des métaux présents dans le catalyseur en sulfures métalliques. Le catalyseur d'hydrotraitement, en particulier d'hydrocraquage est alors activé.

L'activation de catalyseurs d'hydrotraitement, en particulier d'hydrocraquage est réalisée soit *ex-situ,* hors du réacteur d'hydrotraitement, en particulier d'hydrocraquage, soit *in-situ,* dans le réacteur d'hydrotraitement, en particulier d'hydrocraquage. Ces deux méthodes sont connues de l'homme du métier.

Lors du procédé *ex-situ,* réalisé en lit mobile, un agent de sulfuration est mis en contact avec le catalyseur. Le catalyseur est éventuellement traité thermiquement en absence ou en présence d'hydrogène à une pression égale ou proche de la pression atmosphérique. Ainsi, le catalyseur est respectivement pré-sulfuré ou pré-sulfuré et activé.

En outre, pour contrôler l'activité d'hydrotraitement, en particulier d'hydrocraquage, du catalyseur d'hydrotraitement, en particulier d'hydrocraquage respectivement, un composé azoté est généralement mis en contact, *ex-situ,* avec le catalyseur d'hydrotraitement, en particulier d'hydrocraquage respectivement. Le catalyseur obtenu est généralement séché *ex-situ.* Généralement, le catalyseur d'hydrotraitement, en particulier d'hydrocraquage, n'est pas prêt à l'emploi tel quel, et il peut être souhaitable, voire nécessaire, de passiver le catalyseur, le plus souvent *in-situ,* sous haute pression en hydrogène à haute température.

Lors de ce procédé *in-situ,* réalisé habituellement en lit fixe, un agent de sulfuration est introduit dans le réacteur d'hydrotraitement, en particulier d'hydrocraquage, sous haute pression en hydrogène à haute température. Cette étape de sulfuration permet alors d'activer le catalyseur.

En outre, un composé azoté est introduit dans le réacteur d'hydrotraitement, en particulier d'hydrocraquage, sous haute pression en hydrogène à haute température permettant ainsi la passivation des sites acides du catalyseur d'hydrotraitement, en particulier d'hydrocraquage.

De tels procédés sont bien connus de l'homme du métier et largement décrits dans la littérature scientifique et les brevets. Ainsi, la demande internationale WO 2014/001633 décrit un procédé d'hydroconversion de sous-produits du bois en biocarburants qui comprend une étape d'hydrotraitement et une étape d'isomérisation. Cette dernière étape utilise des catalyseurs de métaux supportés par des tamis moléculaires ou zéolithes.

Le document US2009/0308790 décrit un catalyseur d'hydrogénation et un procédé de préparation de ce catalyseur *ex-situ* en présence d'un composé organo-azoté, d'un agent de sulfuration et d'un solvant organique. Les composés organo-azotés du document US2009/0308790 comprennent, de préférence, simultanément de l'azote et de l'oxygène.

La demande de brevet FR2778349 décrit un procédé d'activation de catalyseurs d'hydroconversion, à l'aide d'au moins un composé soufré et au moins un composé azoté.

Le document FR2668951 décrit deux procédés d'activation de catalyseurs d'hydrocraquage, l'un *in-situ* et, l'autre *ex-situ,* comprenant une étape de passivation des sites acides des catalyseurs. Selon ce document, cette étape peut être mise en oeuvre en présence d'un composé azoté choisi parmi les amines primaires, secondaires, tertiaires, les composés contenant un ammonium quaternaire, les arylamines comme les composés de la famille de l'aniline, les pyrroles et ses homologues, les pyridines, les nitriles, les urées et les thio-urées, les dérivés nitrés, nitreux ou nitrosés, ou tout autre composé basique ou susceptible de se transformer en composé basique, notamment l'ammoniac, sous pression d'hydrogène, à chaud et en présence d'un catalyseur.

Ces composés azotés n'offrent cependant pas un bon compromis en termes de maîtrise du risque d'exposition de l'opérateur, des contraintes de manipulation et de stockage, d'odeur, d'efficacité d'inhibition du catalyseur tout en ne nuisant pas à l'activité du catalyseur. Par exemple, l'ammoniac est malodorant et sa manipulation doit être minutieuse ; et l'aniline est aujourd'hui considérée comme CMR (cancérigène, mutagène, reprotoxique) selon le règlement européen CLP (« Classification, Labelling, Packaging »).

Par ailleurs, le procédé d'activation de catalyseur d'hydrotraitement, en particulier d'hydrocraquage, en particulier lorsqu'il est réalisé *ex-situ,* présente les désavantages suivants :

- la passivation du catalyseur sous haute pression en hydrogène nécessite une étape supplémentaire dans le procédé d'hydrotraitement, en particulier d'hydrocraquage, puisqu'elle est généralement réalisée *in-situ* avant l'hydrotraitement, en particulier avant l'hydrocraquage ;
- le composé azoté et l'agent de sulfuration peuvent se désorber du catalyseur d'hydrotraitement, en particulier d'hydrocraquage, avant l'introduction de celui-ci dans le réacteur d'hydrotraitement, en particulier d'hydrocraquage ;
- une étape supplémentaire de séchage est généralement nécessaire allongeant la durée du procédé *ex-situ ;*
- l'activité des catalyseurs d'hydrotraitement, et en particulier d'hydrocraquage, est plus difficile à contrôler du fait que la passivation n'est généralement pas réalisée *ex-situ.*

Il existe ainsi toujours un besoin pour un procédé d'activation *in-situ* de catalyseurs d'hydrotraitement amélioré, et en particulier de catalyseurs d'hydrocraquage amélioré. En effet, pendant la sulfuration des catalyseurs, les réactions de craquage ou d'isomérisation sont gênantes. Ces réactions sont très exothermiques et peuvent nuire à l'activité finale du catalyseur, voire rendre l'opération d'activation incontrôlable. Il existe en particulier un besoin pour un composé ou un mélange de composés permettant, lors de l'activation de catalyseur(s) d'hydrotraitement en particulier d'hydrocraquage, d'inhiber temporairement l'activité du catalyseur sans nuire pour autant à son efficacité lorsqu'il sera mis en oeuvre en hydrotraitement, et en particulier en hydrocraquage, et qui offre un bon compromis en termes de maîtrise des risques d'exposition de l'opérateur, des contraintes de manipulation, de stockage et/ou d'odeur.

DESCRIPTION DE L'INVENTION

Ce problème technique est résolu, en totalité ou tout au moins partiellement, par la présente invention. D'autres avantages encore apparaîtront à la lumière de la description de l'invention qui suit.

L'invention a pour objet un procédé d'activation *in-situ* d'au moins un catalyseur d'hydrotraitement comme défini dans la revendication 1.

La présente invention permet de remédier aux inconvénients de l'art antérieur en proposant un procédé d'activation de catalyseur(s) d'hydrotraitement, en particulier de catalyseur(s) d'hydrocraquage, de mise en oeuvre simple, ledit procédé étant efficace en terme d'activation de catalyseur(s) d'hydrotraitement, en particulier de catalyseur(s) d'hydrocraquage, et offrant un bon compromis en termes de maîtrise des risques d'exposition de l'opérateur, des contraintes de manipulation, de stockage et/ou d'odeur. Avantageusement, le composé azoté selon l'invention mis en oeuvre dans le procédé, réalisé *in-situ,* est non CMR (cancérigène, mutagène, reprotoxique) selon le règlement européen CLP.

Le procédé de la présente invention est tout particulièrement adapté à la production de biocarburants issus de biomasse lignocellulosique et à l'hydrocraquage de coupes pétrolières.

DÉFINITIONS

Sauf mention contraire, les pourcentages mentionnés sont des pourcentages en poids.

Par « teneur pondérale en azote », on entend le pourcentage d'atomes d'azote par molécule exprimé en poids par rapport au poids total du composé azoté.

Par « température ambiante », on entend une température de 20°C.

Par « pression atmosphérique », on entend une pression de 1,013 bar ou 101325 Pascal.

Par « polysulfures d'alkyle », on entend tous les sulfures d'alkyle comprenant au minimum 2 fonctions sulfures par molécule.

Par « polysulfures de dialkyle », on entend tous les sulfures de dialkyle comprenant au minimum 2 fonctions sulfures par molécule.

Par « polyamine », on entend tout composé aminé comprenant au minimum 2 fonctions aminés, substituées ou non, par molécule.

Par « AAA », on entend les alkylalcanolamines.

Par « activité d'hydrotraitement », on entend l'action que possède un catalyseur pour hydrotraiter des composés.

Par « activité hydrocraquante », on entend l'action que possède un catalyseur pour hydrocraquer des hydrocarbures.

Par « Tf », on entend la température de fusion.

<u>DESCRIPTION DÉTAILLÉE DE L'INVENTION</u>

Selon un premier aspect, la présente invention a pour objet un procédé d'activation *in-situ* d'au moins un catalyseur d'hydrotraitement, en particulier d'hydrocraquage, mettant en œuvre au moins un composé azoté comme défini dans la revendication 1.

La mise en oeuvre d'un composé azoté selon l'invention permet d'obtenir au moins un, et avantageusement plusieurs, des avantages suivants :

- l'activité d'hydrotraitement, en particulier d'hydrocraquage du catalyseur d'hydrotraitement, en particulier d'hydrocraquage, est inhibée pendant toute la durée de l'opération de sulfuration de celui-ci ;
- l'activité d'hydrotraitement, en particulier d'hydrocraquage du catalyseur au cours de l'opération d'hydrotraitement, en particulier d'hydrocraquage, ne se trouve pas amoindrie du fait de l'action du composé azoté de l'invention pendant l'opération de sulfuration du catalyseur ;
- la mise en oeuvre d'un composé azoté selon l'invention est facilitée : comparativement aux composés azotés connus générant moins d'ammoniac, les composés azotés de l'invention ne nécessitent pas de lourds équipements pour être injectés ;
- les risques d'exposition de l'opérateur qui manipule le composé azoté de l'invention sont moindres, par rapport aux solutions connues telles que celles qui mettent en oeuvre l'aniline ;
- avantageusement, le composé azoté selon l'invention est non CMR (cancérigène, mutagène, reprotoxique) selon le règlement européen CLP.

Comme indiqué *supra,* le composé azoté mis en œuvre dans le procédé de l'invention a au moins deux, de préférence encore au moins trois, de manière encore plus préférentielle au moins quatre des caractéristiques a), b), c), d) définies ci-dessus, étant entendu que la caractéristique b) est toujours présente. Toutes les combinaisons sont envisageables, par exemple : ab, abc, abd, bc, bcd, bd, et abcd.

Selon un mode de réalisation, le composé azoté selon l'invention présente en outre une masse molaire allant de 80 g.mol$^{-1}$ à 300 g.mol$^{-1}$, de préférence allant de 100 g.mol$^{-1}$ à 250 g.mol$^{-1}$, de manière encore plus préférentielle allant de 100 g.mol$^{-1}$ à 200 g.mol$^{-1}$ , avantageusement allant de 120 g.mol$^{-1}$ à 150 g.mol$^{-1}$; ci-après désignée caractéristique e).

Selon ce mode de réalisation, le composé azoté a, outre la caractéristique e) au moins deux, de préférence encore au moins trois, de manière encore plus préférentielle au moins quatre des caractéristiques a), b), c), d) définies ci-dessus, étant entendu que la caractéristique b) est toujours présente. Toutes les combinaisons sont envisageables, par exemple : abe, abce, abde, bce, bcde, et abcde.

Les composés azotés selon l'invention sont choisis parmi les composés azotés comprenant de 2 à 20 atomes d'azote ; notamment, les polyamines; les AAA; et leurs mélanges. Par exemple, les diamines, les triamines, et autres. Préférentiellement, les composés azotés selon l'invention ne comprennent pas les composés dérivés de l'urée ainsi que les composés nitrés, nitreux ou nitrosés.

Selon un autre mode de réalisation préféré, les composés azotés de l'invention ne contiennent pas de groupement fonctionnel contenant un atome d'oxygène, tel que le groupement hydroxyle, carboxyle, carbonyle ou alcoxyle.

Selon un mode de réalisation, le composé azoté de l'invention ne comporte pas de groupement aromatique ou cyclique ; ci-après désignée caractéristique f).

Selon ce mode de réalisation, le composé azoté a, outre la caractéristique f), au moins deux, de préférence au moins trois, de préférence au moins quatre des caractéristiques a), b), c), d) définies ci-dessus, étant entendu que la caractéristique b) est toujours présente. De préférence encore, au moins cinq des caractéristiques a),b),c),d),e) sont présentes. Toutes les combinaisons sont envisageables, par exemple : abf, abcf, abcdf, abef, abdef, abef, bcf, bcdf, bcdef, bdf, bdef, bcef, et abcdef.

Ledit au moins un composé azoté possède impérativement la caractéristique b), c'est-à-dire que ledit au moins un composé azoté présente un nombre d'atomes d'azote allant de 2 à 20, de préférence allant de 2 à 15, de préférence encore allant de 2 à 10, de manière encore plus préférentielle allant de 2 à 5 par molécule, avantageusement deux atomes d'azote par molécule.

Ledit au moins un composé azoté possède la caractéristique b) et au moins une, de préférence au moins deux, de préférence encore au moins trois, des caractéristiques a), c) d) définies ci-dessus, ainsi qu'éventuellement en outre la caractéristique e) et/ou la caractéristique f).

Des exemples de composés azotés pouvant être utilisées dans la présente invention sont : N,N'-diéthyl-1,3-propanediamine (DEAPA) (Tf = -50°C), tétraméthyl-1,3-propanediamine (TMPDA) (Tf = -82°C), N-méthyl-1,3-propanediamine (Tf = -72°C), N,N'-dibutyl-1,3-propanediamine (Tf= -50°C), N-(3-diméthylaminopropyl)propane-1,3-diamine (DMAPAPA) (Tf = -60°C), N-(3-aminopropyl)-1,3-propanediamine (Tf = -16°C), N,N'-1,2-éthanedi-ylbis-1,3-propanediamine (Tf = -1,5°C), N-(aminopropyl)diéthanolamine (APDEA) (Tf = -20°C), et leurs mélanges.

De préférence, les composés azotés sont les alkylamines choisies parmi N,N'-diéthyl-1,3-propanediamine (DEAPA), tétraméthyl-1,3-propanediamine (TMPDA), N-méthyl-1,3-propanediamine, N,N'-dibutyl-1,3-propanediamine, N-(3-diméthylamino-propyl)propane-1,3-diamine (DMAPAPA), N-(3-aminopropyl)-1,3-propanediamine, N,N'-1,2-éthanedi-ylbis-1,3-propanediamine, et leurs mélanges.

De préférence encore, les composés azotés sont choisis parmi N,N'-diéthyl-1,3-propanediamine (DEAPA) et tétraméthyl-1,3-propanediamine (TMPDA), et le mélange de la DEAPA et la TMPDA.

Selon un mode de réalisation, un mélange d'au moins deux composés azotés est mis en œuvre. Dans le mélange de deux composés azotés, la teneur pondérale en azote du mélange est équivalente à la teneur d'un seul composé azoté tel que défini précédemment. En d'autres termes, cette teneur va de 15 à 35% en poids, de préférence de 20 à 35%, de préférence encore de 20 à 30%, et de manière plus avantageuse de 20 à 25% par rapport au poids total du mélange de composés azotés.

Plus précisément, les équations suivantes permettent de déterminer les quantités relatives de composés azotés à mettre en œuvre pour que la teneur pondérale en azote du mélange demeure conforme à l'invention. Pour un mélange de deux composés azotés $A_1$ et $A_2$, leurs quantités relatives $Q_{A1}$ et $Q_{A2}$ sont exprimées comme suit :

$$Q_{A1} = \frac{(\%N_{A1+A2} - \%N_{A2})}{(\%N_{A1} - \%N_{A2})} \times 100 \quad et \quad Q_{A2} = 100 - Q_{A1}$$

Dans ces équations :

- $A_1$ et $A_2$ représentent deux composés azotés identiques ou différents ;
- $Q_{A1}$ représente la quantité du composé azoté $A_1$, exprimé en % en poids par rapport au poids total du mélange des composés azotés ;
- $Q_{A2}$ représente la quantité du composé azoté $A_2$, exprimé en poids par rapport au poids total du mélange des composés azotés ;
- $\%N_{A1}$ représente la teneur pondérale en azote dans le composé azoté $A_1$, exprimé en % en poids par rapport au poids du composé azoté $A_1$;
- $\%N_{A2}$ représente la teneur pondérale en azote dans le composé azoté $A_2$, exprimé en % en poids par rapport au poids du composé azoté $A_2$; et
- $\%N_{A1+A2}$ représente la teneur pondérale en azote du mélange des deux composés azotés $A_1$ et $A_2$ selon l'invention, exprimé en % en poids par rapport au poids du mélange.

Par exemple, si la teneur pondérale en azote dans le composé azoté $A_1$ est $\%N_{A1} = 15\%$, celle dans le composé azoté $A_2$ est $\%N_{A2} = 30\%$ et que, conformément à la présente invention, la teneur pondérale en azote visée pour le mélange de $A_1+A_2$ est $\%N_{A1+A2}= 20\%$ alors la quantité relative du composé azoté $A_1$ à introduire dans le mélange est égale à $Q_{A1} = 66{,}67\%$ en poids par rapport au poids total du mélange des composés azotés et la quantité du composé azoté $A_2$ relative à introduire dans le mélange est de $Q_{A2} = 33{,}33\%$ en poids par rapport au poids total du mélange des composés azotés.

Lorsque le mélange comprend au moins trois, au moins quatre, au moins cinq ou plus de cinq composés azotés selon l'invention, des équations similaires aux précédentes peuvent être établies afin de déterminer les quantités relatives des composés azotés à mettre en oeuvre pour que la teneur pondérale en azote du mélange demeure conforme à l'invention.

Comme indiqué précédemment, la présente invention a pour objet un procédé d'activation *in-situ* d'au moins un catalyseur d'hydrotraitement, en particulier d'hydrocraquage.

La mise en contact du catalyseur d'hydrotraitement, en particulier du catalyseur d'hydrocraquage, avec le composé azoté de l'invention lors de ladite étape de passivation peut être réalisée par toute méthode connue de l'homme du métier, en particulier par injection en phase liquide ou en phase gaz du composé azoté de l'invention dans le réacteur comprenant au moins un catalyseur d'hydrotraitement, en particulier au moins un catalyseur d'hydrocraquage. Si l'injection est réalisée en phase gaz, le composé azoté est vaporisé lors de l'injection ou avant l'injection. De préférence, l'injection est réalisée en phase liquide.

L'injection du composé azoté de l'invention peut être réalisée par tout moyen connu de l'homme du métier tel qu'une pompe doseuse, une pompe à injection, une pompe de charge.

L'étape de passivation est avantageusement réalisée à une température allant de 120 à 350°C.

L'étape de passivation est avantageusement mise en oeuvre sous atmosphère d'hydrogène. La pression en hydrogène correspond à la pression usuelle de fonctionnement des réacteurs d'hydrotraitement, en particulier d'hydrocraquage. Elle va de préférence de 1 bars à 200 bars (soit de $1.10^5$ Pa à $200.10^5$ Pa), de préférence, de 15 bars à 100 bars (soit de $15.10^5$ Pa à $100.10^5$ Pa).

Lors de l'étape de passivation, le composé azoté est avantageusement injecté à une teneur allant de 0,01 à 20% en poids, de préférence de 0,01% à 10% en poids, de préférence encore de 0,01 à 5% en poids par rapport au poids total du catalyseur d'hydrotraitement, en particulier d'hydrocraquage.

Lors de l'étape de passivation, la teneur en composé azoté est avantageusement ajustée de sorte que la teneur en ammoniac généré va de 0,01 à 40% en poids, de préférence de 0,01 à 20% en poids, de préférence encore de 0,01 à 10% en poids, de manière encore plus préférentielle, de 0,01 à 5% par rapport au poids total du catalyseur d'hydrotraitement, en particulier du catalyseur d'hydrocraquage.

Le catalyseur d'hydrotraitement, en particulier d'hydrocraquage, mis en oeuvre dans la présente invention est de préférence bifonctionnel, ayant une fonction acide et une fonction hydrogénante. Ce type de catalyseur, connu de l'homme du métier, se présente généralement sous la forme d'un métal supporté. La fonction acide est apportée par le support (par exemple alumine ou silico-aluminate amorphe et/ou cristallisée) ou par des dopants halogénés, comme le fluor par exemple, et la fonction hydrogénante est apportée par des oxydes de métaux ou sulfures de métaux, rendus opérationnels par l'étape de sulfuration.

Selon un mode de réalisation, les supports sont généralement des oxydes réfractaires poreux. Les oxydes réfractaires poreux sont de préférence choisis parmi les zéolithes, l'alumine, la silice, la zircone, et les oxydes de béryllium, de chrome, de titane, de magnésium, de thorium, et également les combinaisons de ceux-ci, telles que silico-aluminates et silice-oxyde de titane.

Les supports les plus utilisés dans le domaine de l'hydrotraitement, en particulier de l'hydrocraquage, sont les silico-aluminates cristallisées, appelées zéolithes. Les zéolithes utilisées possèdent des cations échangeables, généralement des cations métalliques ou des ions hydronium, préférentiellement des ions hydronium.

Les zéolithes sont de préférence choisies parmi les zéolithes naturelles, comme par exemple la ferriérite, artificielles et synthétiques telles que, à titre non limitatif, les zéolithes ZSM, par exemple ZSM-22, ZSM-23, ZSM-5, ZSM-11, ZSM-12, ZSM-23, ZSM-35, ZSM-38 et leurs analogues , les zéolithes SAPO, par exemple SAPO-11, SAPO-31 ; les zéolithes bêta et les zéolithes Y.

Les oxydes réfractaires poreux peuvent aussi être éventuellement associés à des zéolithes comme par exemple les combinaisons de zéolithes avec une silice, une zircone ou une alumine.

Le catalyseur d'hydrotraitement, en particulier d'hydrocraquage, mis en oeuvre dans l'invention comprend de préférence des métaux de transition choisis parmi les colonnes 5, 6, 8, 9 et 10 de la classification périodique des éléments de l'IUPAC.

De préférence, le catalyseur d'hydrotraitement, en particulier d'hydrocraquage, comprend un ou plusieurs métaux de transition choisis parmi le vanadium, le niobium, le tantale, le chrome, le molybdène, le tungstène, le fer, le ruthénium, l'osmium, le cobalt, le rhodium, l'iridium, le nickel, le palladium, le platine et les mélanges de deux ou plusieurs d'entre eux en toutes proportions.

Les combinaisons de métaux préférées sont : nickel-tungstène, cobalt-molybdène, nickel-vanadium, nickel-molybdène, molybdène-tungstène et nickel-cobalt. En particulier, le catalyseur nickel/tungstène possède d'excellentes propriétés d'isomérisation et de désaromatisation, tout en présentant la capacité de réaliser des réactions d'hydrodésoxygénation et d'autres réactions d'hydrotraitement en particulier d'hydrocraquage de matières premières organiques, qu'elles soient d'origine fossile (hydrocarbures issus du pétrole) ou d'origine animale ou végétale.

Ces métaux sont généralement sur un support tel que défini précédemment. Pour les catalyseurs nickel/tungstène, les supports silico-aluminate et silice-oxyde de titane sont tout particulièrement adaptés. Ces métaux sont sous forme oxydée sur un support tel qu'une alumine ou une silico-aluminate amorphe ou cristallisée. De préférence, les oxydes de métaux sont sur un support zéolithique.

Les catalyseurs sont à titre d'exemples non limitatifs $Pt/SAPO-11/Al_2O_3$, $Pt/ZSM-22/Al_2O_3$, $Pt/ZSM-23/Al_2O_3$, $NiW/Al_2O_3$, $NiW/zéolithe/Al_2O_3$ et $Pt/SAPO-11/SiO_2$. De préférence, le catalyseur d'hydrotraitement, en particulier d'hydrocraquage est choisi parmi $NiW/Al_2O_3$ et $NiW/zéolithe/Al_2O_3$.

Il est particulièrement judicieux d'utiliser conjointement ou en mélange, des catalyseurs d'hydrotraitement avec des catalyseurs d'hydrodésoxygénation puisqu'ils requièrent tous deux une étape de sulfuration. Ainsi l'hydrodéazotation, l'hydrodésulfuration, la désaromatisation, l'hydroconversion, l'hydrogénation, l'hydroisomérisation, l'hydrodésoxygénation, la désaromatisation et l'hydrocraquage peuvent avoir lieu simultanément, de manière séquencée ou alternée.

Le procédé d'activation *in-situ* des catalyseurs d'hydrotraitement, en particulier d'hydrocraquage, selon l'invention comprend au moins une étape de sulfuration dans laquelle un agent de sulfuration est introduit dans le réacteur d'hydrotraitement, en particulier d'hydrocraquage.

Avantageusement, l'agent de sulfuration est choisi parmi le sulfure d'hydrogène, le sulfure de carbone, le disulfure de diméthyle (DMDS), le sulfure de diméthyle, les mercaptans, les thiophènes et dérivés, les polysulfures d'alkyle, les polysulfures de dialkyle et tous les composés soufrés susceptibles de sulfurer les oxydes de métaux des catalyseurs d'hydrotraitement, en particulier d'hydrocraquage. De préférence, l'agent de sulfuration est le DMDS, notamment commercialisé par la société ARKEMA, par exemple sous les dénominations commerciales DMDS Evolution® et DMDS Evolution® E2.

L'étape de sulfuration peut être réalisée soit en phase gaz soit en phase liquide. De préférence, l'étape de sulfuration est réalisée en phase liquide par mise en contact d'une charge liquide comprenant une coupe légère telle que du kérosène ou du gazole à des températures comprises entre 120 et 350°C à une pression d'hydrogène allant de 1 bars à 200 bars (soit de $1.10^5$ Pa à $200.10^5$ Pa). De préférence, la pression en hydrogène va de 15 bars à 100 bars (soit de $15.10^5$ Pa à $100.10^5$ Pa).

Plus particulièrement, lors du procédé d'activation *in-situ* des catalyseurs d'hydrotraitement, en particulier des catalyseurs d'hydrocraquage selon l'invention, après le chargement d'au moins un catalyseur d'hydrotraitement, en particulier d'hydrocraquage, dans un ou des réacteurs d'hydrotraitement, en particulier d'hydrocraquage, la charge liquide est alors injectée à des températures allant de préférence de 120°C à 350°C. La charge liquide comporte une teneur en soufre comprise de préférence entre 0,01% et 20% en poids et de préférence 0,01% à 5% en poids par rapport au poids total de la charge.

Selon un mode de réalisation, après le chargement du catalyseur, une éventuelle phase de séchage entre 120°C et 200°C avec de l'azote ou de l'hydrogène pour éliminer de l'eau adsorbée pendant l'opération de chargement, la pression de l'unité est portée à la pression correspondant à la pression usuelle de fonctionnement de ladite unité, de préférence entre 1 bars à 200 bars (soit entre $1.10^5$ Pa à $200.10^5$ Pa), de préférence encore entre 15 bars à 100 bars (soit entre $15.10^5$ Pa à $100.10^5$ Pa). La température des réacteurs catalytique est ensuite augmentée par paliers successifs de 200°C à 350°C pour réaliser les réactions de sulfuration et de passivation des catalyseurs d'hydrotraitement, en particulier d'hydrocraquage.

Au cours de l'étape de sulfuration, l'agent de sulfuration est injecté dans la charge liquide ou l'hydrogène qui alimente les réacteurs d'hydrotraitement, en particulier d'hydrocraquage, selon tout moyen connu de l'homme du métier, comme une pompe doseuse à piston, une pompe volumétrique multi-étagée, ou tout autre système de pompage assurant un contrôle du débit d'injection.

Selon un mode de réalisation préféré, l'étape de sulfuration et l'étape de passivation sont réalisées simultanément. Dans ce mode de réalisation, l'agent de sulfuration et le composé azoté sont injectés simultanément dans le ou les réacteur(s) d'hydrotraitement, en particulier d'hydrocraquage. Sont également compris les mélanges comprenant au moins un agent de sulfuration et au moins un composé azoté tel que défini précédemment.

Selon un autre mode de réalisation, l'étape de sulfuration et l'étape de passivation des sites acides des catalyseurs sont réalisées par intermittence, c'est-à-dire que dans le ou les réacteur(s) d'hydrotraitement, en particulier d'hydrocraquage, on injecte l'agent de sulfuration puis au moins un composé azoté selon l'invention, ou inversement, et cette opération est renouvelée une ou plusieurs fois.

Selon un mode de réalisation, après activation de(s) catalyseur(s) d'hydrotraitement, la température est augmentée progressivement dans le réacteur d'hydrotraitement, pour atteindre la température de fonctionnement usuelle des réacteurs d'hydrotraitement, en mode dit de production, par exemple entre 350°C et 450°C. Les composés à hydrotraiter peuvent être introduits dans le réacteur d'hydrotraitement, sous pression d'hydrogène allant par exemple de 50 bars à 200 bars (soit de $50.10^5$ Pa à $200.10^5$ Pa). L'hydrogène présent désorbe l'ammoniac du catalyseur d'hydrotraitement permettant ainsi au catalyseur de retrouver toute son activité d'hydrotraitement pour transformer les composés issus de la biomasse. Avantageusement, la désorption est progressive, ce qui permet de contrôler l'exothermicité de la réaction d'hydrotraitement.

Selon un mode de réalisation, après activation de(s) catalyseur(s) d'hydrocraquage, la température est augmentée progressivement dans le réacteur d'hydrocraquage, pour atteindre la température de fonctionnement usuelle des réacteurs d'hydrocraquage, en mode dit de production, de préférence entre 350°C à 450°C. Les fractions de chaînes hydrocarbonées lourdes à craquer sont introduites dans le réacteur d'hydrocraquage, sous pression d'hydrogène allant de 50 bars à 200 bars (soit de $50.10^5$ Pa à $200.10^5$ Pa). L'hydrogène présent désorbe l'ammoniac du catalyseur d'hydrocraquage permettant ainsi au catalyseur de retrouver toute son activité hydrocraquante pour convertir la fraction lourde. Avantageusement, la désorption est progressive, ce qui permet de contrôler l'exothermicité de la réaction d'hydrocraquage.

L'invention sera mieux comprise à la lumière des exemples non limitatifs suivants, qui sont donnés à titre uniquement illustratif et n'ont pas pour but de limiter la portée de l'invention, définie par les revendications annexées.

EXEMPLE

L'objectif de cet essai est de comparer la décomposition d'amines en ammoniac, sur catalyseurs d'hydrotraitement. La comparaison s'effectue entre les amines selon l'invention, et les amines déjà décrites dans l'art antérieur et connues sur le marché comme la tri n-butylamine et l'aniline.

Le catalyseur utilisé pour cet essai contient 17% en poids d'oxyde de Molybdène et 3,5% en poids d'oxyde de Nickel supporté sur une alumine y. Le DMDS (diméthyldisulfure) et le DEAPA (diéthylaminopropylamine) utilisés dans cet essai, sont fournis par la société ARKEMA.

La conversion en ammoniac des amines est obtenue en sortie du réacteur contenant ce catalyseur. Le catalyseur doit être activé par un traitement dit de sulfuration qui convertit les oxydes métalliques de Nickel et de Molybdène en sulfures métalliques correspondants. Une solution de disulfure de diméthyle dilué à 1,5% massique dans du dodécane est utilisée comme suit :

- 4 mL de catalyseur sont placés dans un réacteur catalytique et séchés à 150°C pendant 1 heure sous azote (10 NL/h) à 0,5 MPa, puis l'azote est remplacé par 1 NL/h l'hydrogène et la pression dans le réacteur est portée à 6 MPa.
- 4 mL/h de dodécane dopé au DMDS (1,5 % massique) est introduit dans le flux entrant d'hydrogène et la température du réacteur est portée à 230°C selon une rampe de température de 25°C/h puis stabilisée à cette température pendant 6 heures, durée suffisante pour observer une concentration d'hydrogène sulfuré dans l'hydrogène en sortie de réacteur supérieure à 0,5 % molaire. Cette concentration en hydrogène sulfuré a été mesurée en ligne par chromatographie en phase gazeuse.
- La température du réacteur est ensuite augmentée à 350°C selon une rampe de 25°C/h puis conservée à cette température pendant au moins 10 heures.

Le catalyseur ainsi activé, est ensuite mis en contact avec différentes solutions d'amines diluées dans le dodécane. La concentration en ammoniac dans l'hydrogène en sortie est mesurée par le même appareil de chromatographie en phase gazeuse. Les conditions de tests ont été les suivantes :

- Débit de dodécane dopé aux amines (0,5 % massique d'azote) : 4 mL/h
- Pression d'hydrogène : 6 MPa
- Débit d'hydrogène : 1 NL/h

La température du réacteur catalytique a été ajustée entre 200 et 300°C, par paliers successifs pour déterminer la température nécessaire à la formation de 50% de l'ammoniac attendu correspondant à 50% de conversion de l'amine en ammoniac. En fonction de l'amine utilisée, les valeurs suivantes de température ont été obtenues :

| | |
|---|---|
| - Aniline : | 256°C |
| - Tri n-butylamine : | 254°C |
| - Diéthylaminepropylamine : | 245°C |

Ces essais montrent la formation d'ammoniac à une température plus basse grâce aux amines de l'invention comparée aux amines utilisées dans l'art antérieur. L'amine répondant aux critères de l'invention a une plus grande facilité à former de l'ammoniac au contact d'un catalyseur à base de Nickel et Molybdène, comparativement aux amines utilisées habituellement dans l'art antérieur.

**Revendications**

1. Procédé d'activation *in-situ* d'au moins un catalyseur d'hydrotraitement comprenant au moins :

    1) une étape de chargement d'au moins un catalyseur d'hydrotraitement dans un réacteur d'hydrotraitement ; puis
    2) une étape d'injection d'une charge liquide à hydrotraiter comportant une teneur en soufre comprise entre 0.01% et 20% en poids à des températures allant de 120°C à 350°C ; puis

3) une étape de sulfuration dudit catalyseur d'hydrotraitement en présence d'un agent de sulfuration ; et
4) une étape de passivation dudit catalyseur d'hydrotraitement en présence d'au moins un composé azoté ayant au moins deux, de préférence encore au moins trois et de manière encore plus préférentielle, au moins quatre des caractéristiques suivantes :

a) une teneur pondérale en azote allant de 15 à 35% en poids, de préférence allant de 20 à 35%, de préférence encore allant de 20 à 30%, et de manière plus avantageuse allant de 20 à 25% par rapport au poids total du composé azoté ;
b) un nombre d'atomes d'azote allant de 2 à 20, de préférence allant de 2 à 15, de préférence encore allant de 2 à 10, de manière encore plus préférentielle allant de 2 à 5 par molécule, avantageusement deux atomes d'azote par molécule ;
c) un point d'ébullition allant de 140°C à 300°C, de préférence allant de 140°C à 250°C, de préférence encore allant de 140°C à 200°C, de manière encore plus préférentielle allant de 140°C à 175°C ; et
d) ledit composé azoté étant sous forme liquide à température ambiante et à pression atmosphérique, étant entendu que la caractéristique b) est toujours présente.

2. Procédé selon la revendication 1, dans lequel l'étape de sulfuration et l'étape de passivation sont réalisées simultanément.

3. Procédé selon la revendication 1 ou la revendication 2, dans lequel le composé azoté est injecté en phase liquide ou en phase gaz, de préférence, en phase liquide.

4. Procédé selon l'une quelconque des revendications 1 à 3, dans lequel le composé azoté est injecté à une teneur allant de 0,01% à 20% en poids, de préférence de 0,01% à 10% en poids, de préférence encore de 0,01% à 5% en poids, par rapport au poids total du catalyseur d'hydrotraitement.

5. Procédé selon l'une quelconque des revendications 1 à 4, dans lequel lors de l'étape de sulfuration, l'agent de sulfuration est choisi parmi le sulfure d'hydrogène, le sulfure de carbone, le disulfure de diméthyle (DMDS), le sulfure de diméthyle, les mercaptans, les thiophènes et dérivés, les polysulfures d'alkyle, et les polysulfures de dialkyle, et de préférence l'agent de sulfuration est le DMDS.

6. Procédé selon l'une quelconque des revendications précédentes, dans lequel le composé azoté présente en outre une masse molaire allant de 80 g.mol$^{-1}$ à 300 g.mol$^{-1}$, de préférence allant de 100 g.mol$^{-1}$ à 250 g.mol$^{-1}$, de manière encore plus préférentielle allant de 100 g.mol$^{-1}$ à 200 g.mol$^{-1}$, avantageusement allant de 120 g.mol$^{-1}$ à 150 g.mol$^{-1}$ ; ci-après désignée caractéristique e).

7. Procédé selon l'une quelconque des revendications précédentes, dans lequel le composé azoté présente une caractéristique f) telle que ledit composé azoté ne comporte pas de groupement aromatique ou cyclique.

8. Procédé selon l'une quelconque des revendications précédentes, dans lequel le composé azoté est choisi parmi N,N'-diéthyl-1,3-propanediamine (DEAPA), tétraméthyl-1,3-propanediamine (TMPDA), N-méthyl-1,3-propanediamine, N,N'-dibutyl-1,3-propanediamine, N-(3-diméthylaminopropyl)propane-1,3-diamine (DMAPAPA), N-(3-aminopropyl)-1,3-propanediamine, N,N'-1,2-éthanedi-ylbis-1,3-propanediamine, N-(aminopropyl)diéthanolamine (APDEA), et leurs mélanges.

**Patentansprüche**

1. Verfahren zur in-situ-Aktivierung mindestens eines Hydrierbehandlungskatalysators, das mindestens Folgendes umfasst:

1) einen Schritt des Eintragens mindestens eines Hydrierbehandlungskatalysators in einen Hydrierbehandlungsreaktor; dann
2) einen Schritt des Einleitens eines zu hydrierbehandelnden Einsatzstoffs mit einem Schwefelgehalt zwischen 0,01 und 20 Gew.-% bei Temperaturen im Bereich von 120 °C bis 350 °C; dann
3) einen Schritt der Sulfidierung des Hydrierbehandlungskatalysators in Gegenwart eines Sulfidierungsmittels und
4) einen Schritt der Passivierung des Hydrierbehandlungskatalysators in Gegenwart mindestens einer Stickstoffverbindung mit mindestens zwei, weiter bevorzugt mindestens drei und noch weiter bevorzugt mindestens vier der folgenden Eigenschaften:

a) einem Stickstoff-Gewichtsgehalt im Bereich von 15 bis 35 Gew.-%, vorzugsweise im Bereich von 20 bis 35 %, weiter bevorzugt im Bereich von 20 bis 30 % und vorteilhafter im Bereich von 20 bis 25 %, bezogen auf das Gesamtgewicht der Stickstoffverbindung;

b) einer Zahl von Stickstoffatomen im Bereich von 2 bis 20, vorzugsweise im Bereich von 2 bis 15, weiter bevorzugt im Bereich von 2 bis 10, noch weiter bevorzugt im Bereich von 2 bis 5 pro Molekül, vorteilhafterweise zwei Stickstoffatomen pro Molekül;

c) einem Siedepunkt im Bereich von 140 °C bis 300 °C, vorzugsweise im Bereich von 140 °C bis 250 °C, weiter bevorzugt im Bereich von 140 °C bis 200 °C, noch weiter bevorzugt im Bereich von 140 °C bis 175 °C; und

d) wobei die Stickstoffverbindung bei Umgebungstemperatur und Normaldruck in flüssiger Form vorliegt, mit der Maßgabe, dass das Merkmal b) immer vorliegt.

2. Verfahren nach Anspruch 1, wobei der Sulfidierungsschritt und der Passivierungsschritt gleichzeitig durchgeführt werden.

3. Verfahren nach Anspruch 1 oder Anspruch 2, wobei die Stickstoffverbindung in der Flüssigphase und in der Gasphase, vorzugsweise in der Flüssigphase, eingeleitet wird.

4. Verfahren nach einem der Ansprüche 1 bis 3, wobei die Stickstoffverbindung in einem Gehalt im Bereich von 0,01 bis 20 Gew.-%, vorzugsweise von 0,01 bis 10 Gew.-%, weiter bevorzugt von 0,01 bis 5 Gew.-%, bezogen auf das Gesamtgewicht des Hydrierbehandlungskatalysators, eingeleitet wird.

5. Verfahren nach einem der Ansprüche 1 bis 4, wobei im Sulfidierungsschritt das Sulfidierungsmittel aus Schwefelwasserstoff, Kohlendisulfid, Dimethyldisulfid (DMDS), Dimethylsulfid, Mercaptanen, Thiophenen und Derivaten, Alkylpolysulfiden und Dialkylpolysulfiden ausgewählt wird und es sich bei dem Sulfidierungsmittel vorzugsweise um DMDS handelt.

6. Verfahren nach einem der vorhergehenden Ansprüche, wobei die Stickstoffverbindung außerdem eine Molmasse im Bereich von 80 g.mol$^{-1}$ bis 300 g.mol$^{-1}$, vorzugsweise im Bereich von 100 g.mol$^{-1}$ bis 250 g.mol$^{-1}$, weiter bevorzugt im Bereich von 100 g.mol$^{-1}$ bis 200 g.mol$^{-1}$, vorteilhafterweise im Bereich von 120 g.mol$^{-1}$ bis 150 g.mol$^{-1}$, aufweist, was nachstehend als Merkmal e) bezeichnet wird.

7. Verfahren nach einem der vorhergehenden Ansprüche, wobei die Stickstoffverbindung ein solches Merkmal f) aufweist, dass die Stickstoffverbindung keine aromatische oder cyclische Gruppe umfasst.

8. Verfahren nach einem der vorhergehenden Ansprüche, wobei die Stickstoffverbindung aus N,N'-Diethyl-1,3-propandiamin (DEAPA), Tetramethyl-1,3-propandiamin (TMPDA), N-Methyl-1,3-propandiamin, N,N'-Dibutyl-1,3-propandiamin, N-(3-Dimethylaminopropyl)propan-1,3-diamin (DMAPAPA), N-(3-Aminopropyl)-1,3-propandiamin, N,N'-1,2-Ethandiylbis-1,3-propandiamin, N-(Aminopropyl)diethanolamin (APDEA) und Mischungen davon ausgewählt wird.

**Claims**

1. Method for in situ activation of at least one hydrotreating catalyst, comprising at least:

1) a step of charging at least one hydrotreating catalyst to a hydrotreating reactor; then

2) a step of injecting a liquid feedstock for hydrotreating, comprising a sulfur content of between 0.01% and 20% by weight, at temperatures of from 120°C to 350°C; then

3) a step of sulfiding said hydrotreating catalyst in the presence of a sulfiding agent; and

4) a step of passivating said hydrotreating catalyst in the presence of at least one nitrogen compound having at least two, more preferably at least three and more preferably still at least four of the following features:

a) a nitrogen content by weight of from 15 to 35% by weight, preferably of from 20 to 35%, more preferably of from 20 to 30% and more advantageously of from 20 to 25%, relative to the total weight of the nitrogen compound;

b) a number of nitrogen atoms of from 2 to 20, preferably of from 2 to 15, more preferably of from 2 to 10, more preferably still of from 2 to 5 per molecule, advantageously two nitrogen atoms per molecule;

c) a boiling point of from 140°C to 300°C, preferably of from 140°C to 250°C, more preferably of from 140°C to 200°C, more preferably still of from 140°C to 175°C; and

d) said nitrogen compound being in liquid form at room temperature and at atmospheric pressure, with the proviso that feature b) is always present.

2. Method according to Claim 1, wherein the sulfiding step and the passivating step are carried out simultaneously.

3. Method according to Claim 1 or Claim 2, wherein the nitrogen compound is injected in liquid phase or in gas phase, preferably in liquid phase.

4. Method according to any one of Claims 1 to 3, wherein the nitrogen compound is injected at a content of from 0.01% to 20% by weight, preferably from 0.01% to 10% by weight, more preferably from 0.01% to 5% by weight, relative to the total weight of the hydrotreating catalyst.

5. Method according to any one of Claims 1 to 4, wherein during the sulfiding step, the sulfiding agent is selected from hydrogen sulfide, carbon sulfide, dimethyl disulfide (DMDS), dimethyl sulfide, mercaptans, thiophenes and derivatives, alkyl polysulfides and dialkyl polysulfides, and preferably the sulfiding agent is DMDS.

6. Method according to any one of the preceding claims, wherein the nitrogen compound additionally has a molar mass of from 80 $g.mol^{-1}$ to 300 $g.mol^{-1}$, preferably of from 100 $g.mol^{-1}$ to 250 $g.mol^{-1}$, more preferably still of from 100 $g.mol^{-1}$ to 200 $g.mol^{-1}$, advantageously from 120 $g.mol^{-1}$ to 150 $g.mol^{-1}$, hereinafter denoted feature e).

7. Method according to any one of the preceding claims, wherein the nitrogen compound has a feature f) such that said nitrogen compound comprises no aromatic or cyclic group.

8. Method according to any one of the preceding claims, wherein the nitrogen compound is selected from N,N'-diethyl-1,3-propanediamine (DEAPA), tetramethyl-1,3-propanediamine (TMPDA), N-methyl-1,3-propanediamine, N,N'-dibutyl-1,3-propanediamine, N-(3-dimethylaminopropyl)propane-1,3-diamine (DMAPAPA), N-(3-aminopropyl)-1,3-propanediamine, N,N'-1,2-ethanediylbis-1,3-propanediamine, N-(aminopropyl)diethanolamine (APDEA) and mixtures thereof.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014001633 A
- US 20090308790 A
- FR 2778349
- FR 2668951